# EUROPÄISCHE PATENTSCHRIFT

(11) **EP 1 415 132 B1**
(45) Veröffentlichungstag und Bekanntmachung des Hinweises auf die Patenterteilung: **02.01.2008**
(21) Anmeldenummer: 02754462.6
(22) Anmeldetag: 31.07.2002
(51) Int. Cl.: G01H 1/00

(54) **SPEKTRALE BEWERTUNG EINES PRÜFOBJEKTS**
SPECTRAL EVALUATION OF AN OBJECT TO BE TESTED
EVALUATION SPECTRALE D'UN OBJET D'ESSAI

(30) Priorität: 08.08.2001 DE 10138919
(43) Veröffentlichungstag der Anmeldung: 06.05.2004
(73) Patentinhaber: SIEMENS AKTIENGESELLSCHAFT, 80333 München (DE)
(72) Erfinder: VÖLKEL, Thomas, 95138 Bad Steben (DE)
(86) Internationale Anmeldenummer: PCT/DE2002/002814
(87) Internationale Veröffentlichungsnummer: WO 2003/016838

(56) Entgegenhaltungen:
- EP-A- 0 908 805
- WO-A-99/60351
- US-A- 5 614 676

## Beschreibung

Die Erfindung betrifft ein Verfahren zur spektralen Bewertung eines Prüfobjekts.

Ein solches Verfahren wird eingesetzt bei der akustischen Prüfung von Prüfobjekten (siehe WO99 /60 351). Insbesondere bei Geräten und Großmaschinen, welche bewegliche bzw. rotierende Teilkomponenten aufweisen, ist eine so genannte akustische Diagnose üblich. Derartige Geräte bzw. Maschinen können z. B. Motoren, Generatoren, Turbinen, Gebläse und vieles mehr sein. Des Weiteren wird das Verfahren eingesetzt zur Schwingungsüberwachung an PKW-Getrieben. Bei einem solchen Verfahren werden an einem oder mehreren ausgewählten Punkten eines Prüfobjekts, z. B. im Bereich von Lagern, Antrieben oder Wellen, Schwingungs- oder Beschleunigungsaufnehmer (z. B. Mikrofon) angebracht. Aus den aufgenommenen akustischen bzw. mechanischen Schwingungen und dem so genannten Körperschall können eine Vielzahl von technischen Aussagen abgeleitet werden. So ist es z. B. möglich, Defekte eines Prüfobjekts frühzeitig zu erkennen. Ferner können exemplarbedingte Ausprägungen von bekannten Störgrößen, verschleißbedingte Abnutzungserscheinungen und vieles mehr beobachtet werden.

Die DE 40 17 448 A1 beschreibt ein Verfahren zur Diagnose der mechanischen Eigenschaften von Maschinen, in denen Schwingungen verursachende, rotierende Bauteile vorhanden sind. Um eine schnelle und zuverlässige Methode zu schaffen, mit der routinemäßig gewonnene Schwingungsbilder verarbeitet werden können, um typische Maschinenfehler zu diagnostizieren, wird das Detektionssignal durch ein Frequenztransformationsverfahren aus dem Zeitbereich in den Frequenzbereich transformiert und die Untersuchung des Signals im Frequenzbereich vorgenommen.

Aus der WO 96/13011 ist ein Schwingungsüberwachungssystem für eine Maschine bekannt, welches einen Mikrocontroller und eine zu überwachende Maschine enthält. Die Maschine enthält mindestens ein rotierendes Element und mindestens einen Sensor zur Umsetzung von mechanischen Schwingungen der Maschine in ein korrespondierendes elektrisches Signal, welches durch den Mikrocontroller ausgewertet wird.

US 5,109,700 beschreibt eine Methode sowie eine Vorrichtung zur Analyse rotierender Maschinen. Dabei nimmt ein mit einer rotierenden Maschine verbundener Schwingungsaufnehmer die Schwingung der Maschine auf und generiert ein entsprechendes elektrisches Ausgangssignal. Die Vorrichtung ist vorgesehen zur Auswertung des elektrischen Signals und zur Ausgabe bzw. Darstellung des Signalpegels, der Rotationsgeschwindigkeit sowie des Zustands der Lager der Maschine.

Der Erfindung liegt die Aufgabe zugrunde, ein Verfahren zur spektralen Bewertung eines Prüfobjekts anzugeben, welches eine Bewertung unabhängig vom jeweiligen Betriebszustand des Prüfobjekts zulässt.

Diese Aufgabe wird gelöst durch ein Verfahren zur spektralen Bewertung eines Prüfobjekts in durch Betriebsparameter gekennzeichneten Betriebszuständen, wobei ein erster Betriebsparameter ein Drehzahl-Istwert ist, bei welchem Verfahren automatisch
- mit Messmitteln ein Frequenzspektrum des Prüfobjekts aufgenommen wird, wobei das Frequenzspektrum erste Amplitudenwerte in Abhängigkeit von ersten Frequenzwerten aufweist,
- die ersten Frequenzwerte des Frequenzspektrums zur Normierung auf den Drehzahl-Istwert bezogen werden,
- eine Alarmkurve mit zweiten Amplitudenwerten in Abhängigkeit von zweiten Frequenzwerten gebildet wird,
- die zweiten Frequenzwerte der Alarmkurve zur Normierung auf den Drehzahl-Istwert bezogen werden,
- die zweiten Amplitudenwerte der Alarmkurve in Abhängigkeit der Betriebsparameter geändert werden,
- die ersten Amplitudenwerte des normierten Frequenzspektrums mit den zweiten Amplitudenwerten der normierten und in Abhängigkeit der Betriebsparameter geänderten Alarmkurve verglichen werden und ein Ergebnis des Vergleichs zur Bewertung des Prüfobjekts verwendet wird.

Zur Maschinenüberwachung wird häufig die vibroakustische Analyse herangezogen. Bei diesem Verfahren werden die Amplituden von charakteristischen Frequenzkomponenten des Prüfobjekts (z. B. Lager, Getriebe, Lüfter, usw.) bewertet. Somit entsteht eine einhüllende Alarmkurve über dem Spektrum. Durchbricht eine Frequenzkomponente mit ihrer Amplitude die Alarmkurve wird ein Alarm generiert. Üblicherweise muss diese Alarmkurve vom Anwender eines vibroakustischen Prüfsystems bei der Projektierung fest definiert werden. Die Bewertung der Spektren kann nur bei definierten, d. h. konstanten Verhältnissen/Betriebszuständen des Prüfobjekts vorgenommen werden. Problematisch wird es dann, wenn das Prüfobjekt einen anderen als den bei der Projektierung der Alarmkurve zugrundegelegten Betriebszustand einnimmt, d. h. zum Beispiel mit veränderter Drehzahl oder Last arbeitet. Drehzahlveränderungen führen zu Frequenzverschiebungen, dies bedeutet, dass Frequenzkomponenten aus ihren Bereich heraus laufen und somit einen Fehlalarm auslösen können. Bei Laständerungen bei gleicher Drehzahl können sich die Amplituden der Frequenzkomponenten erhöhen/verringern, was dazu führen kann, dass entweder ein Fehlalarm ausgelöst wird, oder ein Fehler nicht erkannt wird. Das erfindungsgemäße Verfahren bietet hier eine elegante Lösung. Die für einen bestimmten Betriebszustand projektierte Alarmkurve und das aufgezeichnete Frequenzspektrum des Prüfobjekts werden bei der Erfindung so geändert, dass eine Bewertung unabhängig vom jeweiligen aktuellen Betriebszustand möglich wird.

Das Verfahren kann insbesondere eine Bewertung des Prüfobjekts unabhängig von der aktuellen Last und/oder Temperatur des Prüfobjekts ermöglichen. Die zweiten Amplitudenwerte der Alarmkurve werden dazu in Abhängigkeit einer beliebigen, durch einen Anwender vorgebbaren Funktion der Betriebsparameter geändert. Diese Funktion liegt z. B. in Form einer Tabelle vor, welche die Zuordnungen zwischen einem Korrekturfaktor für den Amplitudenwert der Alarmkurve und dem jeweiligen Betriebsparameter enthält.

Vorteilhafterweise wird die normierte und in Abhängigkeit der Betriebsparameter geänderte Alarmkurve eine einhüllende Kurve über dem normierten Frequenzspektrum des Prüfobjekts in einem fehlerfreien Normalzustand bilden und ein Alarm wird dann generiert, wenn mindestens ein Amplitudenwert des normierten Frequenzspektrums außerhalb der einhüllenden Kurve liegt.

Nachfolgend wird die Erfindung anhand der in den Figuren dargestellten Ausführungsbeispiele näher beschrieben und erläutert.

Es zeigen:
- FIG 1: Frequenzspektren für verschiedene Drehzahl-Istwerte und eine Alarmkurve, jeweils vor der Bearbeitung mit dem Verfahren,
- FIG 2: Frequenzspektren für verschiedene Drehzahl-Istwerte und eine Alarmkurve, nach der Durchführung des Verfahrens,
- FIG 3: eine Funktion zwischen einem Betriebsparameter und einem Korrekturfaktor für die Amplitudenwerte der Alarmkurve,
- FIG 4: ein Frequenzspektrum und eine Alarmkurve im Betriebszustand Leerlauf,
- FIG 5: ein Frequenzspektrum und eine Alarmkurve im Betriebszustand mit 50 % Last und
- FIG 6: ein Frequenzspektrum und eine Alarmkurve im Betriebszustand mit 75 % Last.

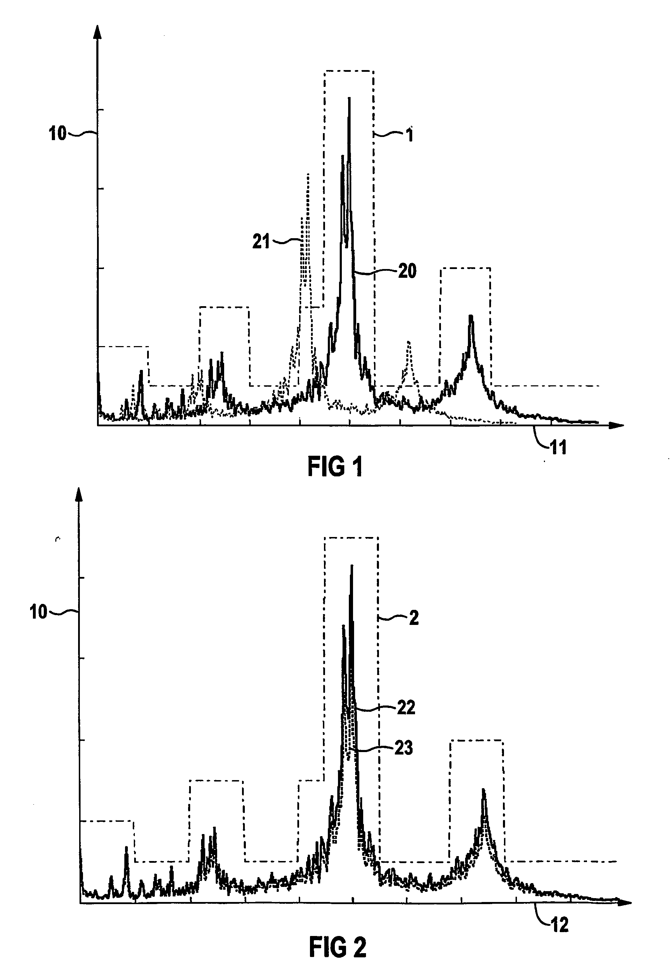

FIG 1 zeigt ein Diagramm mit zwei verschiedenen Frequenzspektren 20, 21 und einer Alarmkurve 1. Gegen die senkrechte Achse 10 des Diagramms sind die Amplitudenwerte der Frequenzspektren 20, 21 und der Alarmkurve 1 aufgezeichnet, gegen die waagerechte Achse 11 des Diagramms ist die Frequenz aufgetragen. Im Ausführungsbeispiel ist das Prüfobjekt als Maschine ausgebildet. An der Maschine ist mindestens ein Beschleunigungssensor, z. B. in Form eines Mikrofons, angebracht. Mit diesem Beschleunigungssensor wird ein typisches Frequenzspektrum 20 der Maschine aufgenommen, in diesem Fall bei einem Drehzahl-Istwert von hundert Umdrehungen pro Minute. Das Frequenzspektrum 20 sei im fehlerfreien Normalzustand der Maschine aufgenommen. Für den Fall, dass sich der Betriebszustand der Maschine nicht ändert, deuten Änderungen dieses Frequenzspektrums 20 auf Änderungen an der Maschine selbst hin. Diese Änderungen können z. B. durch Verschleiß oder durch Defekte an der Maschine verursacht werden. Die Änderungen des Frequenzspektrums 20 sind im hörbaren Bereich auch für einen Anwender wahrnehmbar. Die Maschine beginnt z. B. unruhig zu laufen, sie rattert oder sie quietscht. Mit dem vorgeschlagenen vibroakustischen Verfahren wird die Überwachung von Frequenzspektren automatisiert und auch auf nicht hörbare Frequenzbereiche ausgedehnt. Dazu projektiert ein Anwender für das Frequenzspektrum 20 der Maschine im fehlerfreien Normalzustand eine Alarmkurve 1. Die Alarmkurve 1 bildet eine einhüllende Kurve des Frequenzspektrums 20 in der Art, dass die Amplitudenwerte des Frequenzspektrums 20 während des Normalbetriebs der Maschine die jeweils festgesetzten Schwellwerte der Alarmkurve 1 nicht überschreiten. Schon kleine Abweichungen vom normalen Betriebszustand der Maschine machen sich jedoch in der Ausformung des Frequenzspektrums 20 bemerkbar. Der Betriebszustand der Maschine ist durch eine Vielzahl von Betriebsparametern gekennzeichnet. Beispiele für solche Betriebsparameter sind bei einer Maschine mit rotierenden Teilen die Drehzahl, ganz allgemein bei Maschinen die Belastung bzw. die Last der Maschine, die Temperatur, die Luftfeuchtigkeit, die Anzahl der Betriebsstunden und ähnliche Umgebungsparameter. Eine Abweichung des Werts eines solchen Betriebsparameters von seinem Wert im Normalzustand der Maschine führt direkt zu einer Änderung der Amplitudenwerte des Frequenzspektrums 20 bei bestimmten Frequenzen. Besonders deutlich sichtbar werden Änderungen der Betriebsparameter Drehzahl-Istwert und Belastung der Maschine. Ändert sich der Drehzahl-Istwert der Maschine, so wird sich das Frequenzspektrum proportional zu dieser Drehzahländerungen in Richtung der waagerechten Frequenzachse verzerren. FIG 1 zeigt als Beispiel das Frequenzspektrum 21 der Maschine bei einem Drehzahl-Istwert von achtzig Umdrehungen pro Minute. Das zweite Frequenzspektrum 21 scheint gestaucht zu sein im Gegensatz zum ersten Frequenzspektrum 20. Da die Alarmkurve 1 in FIG 1 jedoch für das erste Frequenzspektrum 20 definiert wurde und somit eine einhüllende Kurve zum Frequenzspektrum 20 bildet, überschreitet das zweite Frequenzspektrum 21 deutlich die Alarmkurve 1. Im Beispielsfall würde also ein Absinken des Drehzahl-Istwerts einen Alarm auslösen. Bei drehzahlveränderlichen Maschinen ist dieses Verhalten meist nicht gewünscht. Ebenso führt eine Änderung der Belastung der Maschine zu einer Änderung des zugehörigen Frequenzspektrums. Abhängig von der Änderung der Belastung werden sich bestimmte Frequenzanteile des Frequenzspektrums erhöhen oder erniedrigen und damit unbeabsichtigt ein Alarm ausgelöst werden oder möglicherweise ein Alarm verhindert werden.

In FIG 2 sind Frequenzspektren 22, 23 und eine Alarmkurve 2 dargestellt. Gegen die senkrechte Achse 10 werden die Amplitudenwerte der Frequenzspektren 22, 23 und der Alarmkurve 2 aufgetragen. Gegen die waagerechte Achse 12 wird die auf die Drehzahl normierte Frequenz, d. h. der Quotient aus Frequenz und Drehzahl-Istwert aufgetragen. Dadurch, dass die Frequenzspektren 22, 23 auf die Drehzahl normiert werden, verbleibt das Frequenzspektrum 23 einer Maschine mit verminderter Drehzahl vollständig unter der Alarmkurve 2. Im Gegensatz zum Frequenzspektrum 22, welches wiederum bei einem Drehzahl-Istwert von hundert Umdrehungen pro Minute aufgenommen wurde, ändert sich das Frequenzspektrum 23, welches bei einem Drehzahl-Istwert von achtzig Umdrehungen pro Minute aufgenommen wurde, nur marginal in seinen Amplitudenwerten. Die für die Maschine charakteristischen Erhöhungen der Amplitudenwerte des Frequenzspektrums bei bestimmten Resonanzfrequenzen der Maschine ändern ihre Verteilung entlang der waagerechten Achse 12 nicht, da die Frequenz auf die Drehzahl normiert wurde. Die für einen bestimmten Betriebszustand mit einer bestimmten Drehzahl festgelegte Alarmkurve 2 kann somit unabhängig vom Drehzahl-Istwert der Maschine beibehalten werden.

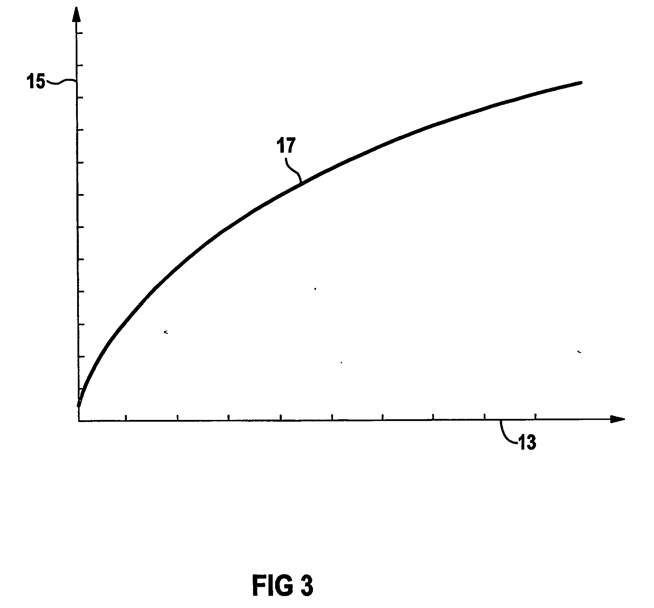

Die Frequenzspektren 22, 23 sind jedoch nicht nur vom Betriebsparameter Drehzahl abhängig, sondern von einigen weiteren Betriebsparametern der Maschine. Eine Normierung der Frequenzspektren auf verschiedene Betriebsparameter erreicht man dadurch, dass man die Amplitudenwerte der Alarmkurve 2 mit Korrekturfaktoren multipliziert. Diese Korrekturfaktoren stehen dabei in einer funktionalen Beziehung zu den einzelnen Betriebsparametern. Der Verlauf eines solchen Korrekturfaktors für die Korrektur der Amplitudenwerte der Alarmkurve 2 ist in FIG 3 dargestellt. Der Wert des Korrekturfaktors ist gegen die senkrechte Achse 15 aufgetragen, der Wert der Belastung als Betriebsparameter ist gegen die waagerechte Achse 13 aufgetragen. Die funktionale Beziehung zwischen Korrekturfaktor und Belastung ist als Kurve 17 dargestellt. Der Verlauf der Kurve 17 wird vor Durchführung des Verfahrens durch ein Anwender projektiert und/oder während der Durchführung der Verfahrens automatisch angepasst. Die funktionale Beziehung zwischen einem Betriebsparameter und dem Korrekturfaktor für die Amplitudenwerte einer Alarmkurve ist dabei frei wählbar. Haben mehrere Betriebsparameter Einfluss auf das Aussehen der Frequenzspektren, so ist es möglich, mehrere Korrekturfaktoren zu bestimmen und mit dem Produkt der Korrekturfaktoren die Amplitudenwerte der Alarmkurve zu multiplizieren. Da die Alarmkurve ihrerseits wiederum eine Funktion der auf die Drehzahl normierten Frequenz darstellt, besteht des Weiteren die Möglichkeit für die einzelnen normierten Frequenzbereiche jeweils verschiedene funktionale Beziehungen zwischen den Betriebsparametern und den Korrekturfaktoren anzuwenden.

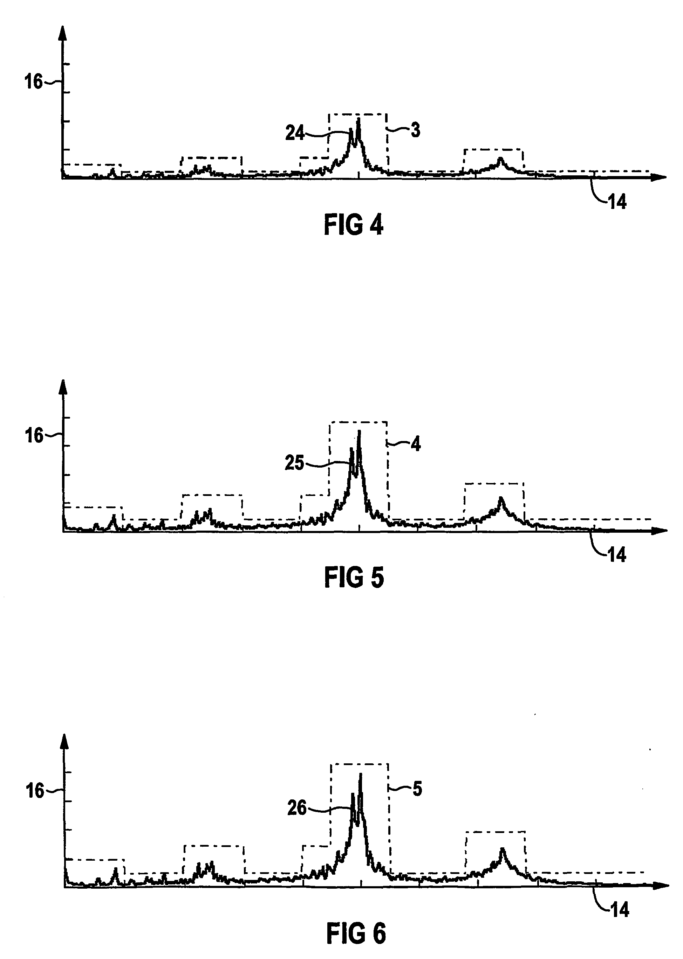

In FIG 4 bis FIG 6 sind Frequenzspektren 24, 25, 26 und Alarmkurven 3, 4, 5 bei unterschiedlichen Belastungen der Maschine des Ausführungsbeispiels dargestellt. Gegen die senkrechte Achse 16 sind jeweils die Amplitudenwerte der Frequenzspektren und der Alarmkurven aufgetragen. Die auf die Drehzahl normierte Frequenz ist gegen die waagerechte Achse 14 aufgetragen. Die Größenmaßstäbe, die für die senkrechten Achsen 16 bzw. für die waagerechten Achsen 14 verwendet werden, sind in FIG 4 bis FIG 6 jeweils gleich. Das Frequenzspektrum 24 in FIG 4 ist bei einer Maschine im Leerlauf aufgenommen, das Frequenzspektrum 25 in FIG 5 bei der gleichen Maschine bei 50% Belastung und schließlich das Frequenzspektrum 26 in FIG 6 bei derselben Maschine bei einer Belastung von 75%. Die Drehzahl der Maschine ist jeweils die gleiche. Deutlich sichtbar sind die mit steigender Last der Maschine ansteigenden Amplitudenwerte der Frequenzspektren 24, 25 und 26. Damit durch diese ansteigenden Amplitudenwerte nicht fälschlicherweise ein Alarm ausgelöst wird, werden die Alarmkurven 3, 4, 5 durch das vorgeschlagenen Verfahren entsprechend erhöht. Der Korrekturfaktor, mit dem die Amplitudenwerte der Alarmkurve dazu multipliziert werden, wird beispielsweise über die in FIG 3 als Kurve 17 dargestellte Funktion ermittelt.

In einem weiteren Ausführungsbeispiel wird anhand der Betriebsparameter Drehzahl und Last eines Prüfobjektes die Alarmkurve automatisch angepasst. Die spektralen Eckwerte der Alarmkurve werden anhand des Drehzahl-Istwerts normiert. Werden nun auch noch die spektralen Komponenten in ihrer Frequenz auf den Drehzahl-Istwert bezogen, können Alarmkurve und Spektrum des Prüfobjekts unabhängig von der Drehzahl miteinander verglichen werden. Da sich die Schwingungsamplituden mit der Drehzahl und Last verändern, ist es möglich, abhängig von den beiden Parametern die Alarmkurve in ihren Beträgen (Schwellwerten) zu verändern. Die Funktion Last-/Drehzahländerung zu Schwellwertänderung ist frei einstellbar. Zum Beispiel sollen bei anderthalbfacher Last die Schwellwerte um den Faktor zwei und bei zweifacher Last die Schwellwerte um den Faktor drei geändert werden. Dadurch ist es nun möglich, unabhängig von der Drehzahl und der Belastung eine korrekte Bewertung des Schwingungssignals und somit des Prüfobjekts durchzuführen. Es sind noch weitere Betriebsparameter wie zum Beispiel Temperatur, Luftfeuchte zur Korrektur der Alarmkurve möglich. Haben n Parameter einen Einfluss auf die Schwellwerte, so kann auch eine n-dimensionale Korrekturfunktion angewandt werden.

Zusammenfassend betrifft die Erfindung somit ein Verfahren zur spektralen Bewertung eines Prüfobjekts, welches eine Bewertung unabhängig vom jeweiligen, durch Betriebsparameter gekennzeichneten Betriebszustand des Prüfobjekts zulässt, wobei ein erster Betriebsparameter ein Drehzahl-Istwert ist, bei welchem Verfahren automatisch mit Messmitteln ein Frequenzspektrum 22, 23 des Prüfobjekts aufgenommen wird, wobei das Frequenzspektrum 22, 23 erste Amplitudenwerte in Abhängigkeit von ersten Frequenzwerten aufweist, die ersten Frequenzwerte des Frequenzspektrums 22, 23 zur Normierung auf den Drehzahl-Istwert bezogen werden, eine Alarmkurve 2 mit zweiten Amplitudenwerten in Abhängigkeit von zweiten Frequenzwerten gebildet wird, die zweiten Frequenzwerte der Alarmkurve 2 zur Normierung auf den Drehzahl-Istwert bezogen werden, die zweiten Amplitudenwerte der Alarmkurve 2 in Abhängigkeit der Betriebsparameter geändert werden, die ersten Amplitudenwerte des normierten Frequenzspektrums 22, 23 mit den zweiten Amplitudenwerten der normierten und in Abhängigkeit der Betriebsparameter geänderten Alarmkurve 2 verglichen werden und ein Ergebnis des Vergleichs zur Bewertung des Früfobjekts verwendet wird.

## Patentansprüche

1. Verfahren zur spektralen Bewertung eines Prüfobjekts in durch Betriebsparameter gekennzeichneten Betriebszuständen, wobei ein erster Betriebsparameter ein Drehzahl-Istwert ist, bei welchem Verfahren automatisch
• mit Messmitteln ein Frequenzspektrum (22, 23) des Prüfobjekts aufgenommen wird, wobei das Frequenzspektrum (22, 23) erste Amplitudenwerte in Abhängigkeit von ersten Frequenzwerten aufweist,
• die ersten Frequenzwerte des Frequenzspektrums (22, 23) zur Normierung auf den Drehzahl-Istwert bezogen werden,
• eine Alarmkurve (2) mit zweiten Amplitudenwerten in Abhängigkeit von zweiten Frequenzwerten gebildet wird,
• die zweiten Frequenzwerte der Alarmkurve (2) zur Normierung auf den Drehzahl-Istwert bezogen werden,
• die zweiten Amplitudenwerte der Alarmkurve (2) in Abhängigkeit der Betriebsparameter geändert werden,
• die ersten Amplitudenwerte des normierten Frequenzspektrums (22, 23) mit den zweiten Amplitudenwerten der normierten und in Abhängigkeit der Betriebsparameter geänderten Alarmkurve (2) verglichen werden und ein Ergebnis des Vergleichs zur Bewertung des Prüfobjekts verwendet wird.

2. Verfahren nach Anspruch 1,
**dadurch gekennzeichnet,**
**dass** die Betriebszustände des Prüfobjekts durch einen zweiten zu einer Last des Prüfobjekts proportionalen Betriebsparameter **gekennzeichnet** sind.

3. Verfahren nach Anspruch 1 oder 2,
**dadurch gekennzeichnet,**
**dass** die Betriebszustände des Prüfobjekts durch einen dritten zu einer Temperatur des Prüfobjekts proportionalen Betriebsparameter **gekennzeichnet** sind.

4. Verfahren nach einem der vorhergehenden Ansprüche,
**dadurch gekennzeichnet,**
**dass** die zweiten Amplitudenwerte der Alarmkurve (2) in Abhängigkeit einer durch einen Anwender vorgebbaren Funktion der Betriebsparameter geändert werden.

5. Verfahren nach einem der vorhergehenden Ansprüche,
**dadurch gekennzeichnet,**
**dass** die normierte und in Abhängigkeit der Betriebsparameter geänderte Alarmkurve (2) eine einhüllende Kurve über dem normierten Frequenzspektrum (22, 23) des Prüfobjekts in einem fehlerfreien Normalzustand bildet, wobei ein Alarm generiert wird, wenn mindestens ein Amplitudenwert des normierten Frequenzspektrums (22, 23) außerhalb der einhüllenden Kurve liegt.

6. Verfahren nach einem der vorhergehenden Ansprüche,
**dadurch gekennzeichnet,**
**dass** die Messmittel als vibroakustische Messmittel ausgebildet sind.

7. Verwendung des Verfahrens nach einem der vorhergehenden Ansprüche zur spektralen Bewertung einer Maschine.

8. Verwendung des Verfahrens nach einem der Ansprüche 1 bis 6 zur Schwingungsüberwachung von Fahrzeugkomponenten.

## Claims

1. Method for the spectral evaluation of an object to be tested in operating states **characterised by** operating parameters, a first operating parameter being an actual rotational speed value, wherein automatically
• a frequency spectrum (22, 23) of the object to be tested is recorded by measuring means, wherein the frequency spectrum (22, 23) has first amplitude values which depend on first frequency values,
• the first frequency values of the frequency spectrum (22, 23) are used for normalisation in relation to the actual rotational speed value,
• an alarm curve (2) is formed with second amplitude values which depend on second frequency values,
• the second frequency values of the alarm curve (2) are used for normalisation in relation to the actual rotational speed value,
• the second amplitude values of the alarm curve (2) are changed according to the operating parameters,
• the first amplitude values of the normalised frequency spectrum (22, 23) are compared with the second amplitude values of the normalised alarm curve (2) which is changed according to the operating parameters, and a result of the comparison is used to evaluate the object to be tested.

2. Method according to claim 1,
**characterised in that**
the operating states of the object to be tested are **characterised by** a second operating parameter which is proportional to a load of the object to be tested.

3. Method according to claim 1 or 2,
**characterised in that**
the operating states of the object to be tested are **characterised by** a third operating parameter which is proportional to a temperature of the object to be tested.

4. Method according to one of the preceding claims,
**characterised in that**
the second amplitude values of the alarm curve (2) are changed according to a function of the operating parameters, which function can be specified by a user.

5. Method according to one of the preceding claims,
**characterised in that**
the alarm curve (2) which is normalised and changed according to the operating parameters forms an envelope curve over the normalised frequency spectrum (22, 23) of the object to be tested in a fault-free normal condition, wherein an alarm is generated if at least one amplitude value of the normalised frequency spectrum (22, 23) lies outside the envelope curve.

6. Method according to one of the preceding claims,
**characterised in that**
the measuring means are fashioned as vibro-acoustic measuring means.

7. Use of the method according to one of the preceding claims for the spectral evaluation of a machine.

8. Use of the method according to one of claim 1 to 6 for monitoring the vibration of vehicle components.

## Revendications

1. Procédé d'évaluation spectrale d'un objet à tester dans des états de fonctionnement **caractérisés par** des paramètres de fonctionnement, dans lequel un premier paramètre de fonctionnement est une valeur réelle de la vitesse de rotation, procédé dans lequel automatiquement
• On enregistre par des moyens de mesure un spectre (22, 23) de fréquence de l'objet à tester, le spectre (22, 23) de fréquence ayant de premières valeurs d'amplitude en fonction de premières valeurs de fréquence,
• On rapporte à la valeur réelle de la vitesse de rotation les premières valeurs de fréquence du spectre (22, 23) de fréquence en vue de les normer.
• On forme une courbe (2) d'alerte ayant des deuxièmes valeurs d'amplitude en fonction de deuxièmes valeurs de fréquence,
• On rapporte à la valeur réelle de la vitesse de rotation les deuxièmes valeurs de fréquence de la courbe (2) d'alerte en vue de les normer,
• On modifie les deuxièmes valeurs d'amplitude de la courbe (2) d'alerte en fonction des paramètres de fonctionnement,
• On compare les premières valeurs d'amplitude du spectre (22, 23) de fréquence normée aux deuxièmes valeurs d'amplitude de la courbe (2) d'alerte normée et modifiée en fonction des paramètres de fonctionnement et on utilise un résultat de la comparaison pour l'évaluation de l'objet à tester.

2. Procédé suivant la revendication 1,
**caractérisé**
**en ce que** l'on caractérise les états de fonctionnement de l'objet à tester par un deuxième paramètre de fonctionnement proportionnel à une charge de l'objet à tester.

3. Procédé suivant la revendication 1 ou 2,
**caractérisé**
**en ce que** l'on caractérise les états de fonctionnement de l'objet à tester par un troisième paramètre de fonctionnement proportionnel à une température de l'objet à tester.

4. Procédé suivant l'une des revendications précédentes,
**caractérisé**
**en ce que** l'on modifie les deuxièmes valeurs d'amplitude de la courbe (2) d'alerte suivant une fonction, pouvant être prescrite par un utilisateur, du paramètre de fonctionnement.

5. Procédé suivant l'une des revendications précédentes,
**caractérisé**
**en ce que** la courbe (2) d'alerte, normée et modifiée en fonction des paramètres de fonctionnement, forme dans un état normal sans défaut une courbe enveloppe du spectre (22, 23) de fréquence normée, de l'objet à tester, une alerte étant engendrée lorsqu'au moins une valeur d'amplitude du spectre (22, 23) de fréquence normée se trouve en dehors de la courbe enveloppe.

6. Procédé suivant l'une des revendications précédentes,
**caractérisé**
**en ce que** les moyens de mesure sont sous la forme de moyens de mesure vibroacoustiques.

7. Utilisation du procédé suivant l'une des revendications précédentes pour l'évaluation spectrale d'une machine.

8. Utilisation du procédé suivant l'une des revendications 1 à 6 pour le contrôle des oscillations d'éléments de véhicules automobiles.
